(19) Europäisches Patentamt
European Patent Office
Office européen des brevets

(11) **EP 2 728 332 B1**

(12) **EUROPEAN PATENT SPECIFICATION**

(45) Date of publication and mention
of the grant of the patent:
**26.09.2018 Bulletin 2018/39**

(51) Int Cl.:
**G01M 7/00** *(2006.01)*       **G01M 7/04** *(2006.01)*
**G01M 13/02** *(2006.01)*

(21) Application number: **12190856.0**

(22) Date of filing: **31.10.2012**

(54) **Test rig**

Testanlage

Banc d'essai

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.05.2014 Bulletin 2014/19**

(73) Proprietor: **Siemens Aktiengesellschaft
80333 München (DE)**

(72) Inventor: **Jensen, Brian Gabe
8700 Horsens (DK)**

(56) References cited:
**WO-A2-2010/000711       GB-A- 1 317 191
US-A- 3 538 756       US-A1- 2011 023 629
US-A1- 2011 041 624**

## Description

The invention describes a test rig for testing a component, a wind turbine test rig, and a method of testing a component.

Certain structures such as tall towers, wind turbines, etc. are subject to structural loading during their lifetime. For example, the forces acting on a wind turbine nacelle and tower during operation of the wind turbine can result in excessive wear and material fatigue of various structural elements such as bearings, nacelle, bedframe hub, yaw ring, etc. Excessive wear on parts such as bearings can require expensive maintenance and repair procedures, while material fatigue can lead to the development of hairline cracks or larger cracks, ultimately leading to serious damage and component failure.

However, it is difficult to predict the likelihood, the location and the extent of such damage. For example, material fatigue can take a long time to develop. Several years may pass before any signs of damage develop, and these may only be discovered by chance or in a specific search for such signs.

Therefore, manufactures of such structures may invest considerable effort in structural testing, and may attempt to model the effects of loading over a relatively short time in order to predict the real effects of loading during the actual lifetime of a structure. Test rigs have been used in the past to test a rotating apparatus such as a propeller, for example as described in GB 392,602. Relatively primitive types of test apparatus have been superseded by dedicated test apparatus that can better model the forces that can be expected act on the component during a real-life situation. For example, WO 2010/000711 A2 describes one kind of test rig for testing a wind turbine blade, while in another setup, a test rig for a wind turbine can be mounted onto an exemplary housing, for example onto a hub mounted to a nacelle. The test rig can be designed to generate forces and to transfer these essentially directly to the housing. For the purposes of the testing, it is not necessary to mount the nacelle onto a tower, or to attach rotor blades to the hub, and much useful information can be collected by arranging sensors such as strain gauges, accelerometers, etc. to any relevant parts or elements that are susceptible to material fatigue. A known test rig uses a rotating radial weight mounted in a frame that is secured to the hub in such a test setup. A motor drives the shaft to which the weight is connected, and the resulting centrifugal forces are transferred as a load to the wind turbine test setup. Such a test rig can be used to collect load and fatigue information for a test setup over a relatively short timespan, corresponding to a "real-life" time span for an actual component. For example, a test rig for a wind turbine test setup can be operated continuously for a time span of only a few weeks or months in order to gather information corresponding to several decades for a comparable wind turbine.

However, any large structure with one or more degrees of freedom or "elasticity" will have one or more resonant frequencies. This applies also to such a test setup in which a test rig is mounted to such a structure. A degree of freedom or a certain amount of elasticity may be unavoidable, since the test rig itself is made of several elements that are joined together, and the test rig must also be mounted to the component under test using fasteners or other connections; and the component under test may itself be connected or mounted to another component or part, etc. Therefore, the known test rigs can only be safely used outside of a critical range about a resonant frequency of the test setup if damage to the test rig and/or the test setup is to be avoided. For example, a test rig that generates centrifugal forces and transfers these as lateral forces to a component under test must be halted when the forces and the rotational frequency approach a resonant frequency range of the test rig with the component under test. The lateral force that is actually applied to the component under test can therefore be much greater than the magnitude of the centrifugal force itself if the lateral force is "amplified" by the resonant behaviour of the test rig. This means that the amount of useful loading/fatigue information that can be collected is limited owing to the necessary "gaps" about the resonant frequencies, making it difficult to extrapolate or interpolate the test results to a satisfactory degree of accuracy. The lack of accurate information collected during operation of the test setup makes it difficult to determine the correct material strength to use for structural components such as bearings, connectors, fasteners, a bedframe, etc. As a result, over the lifetime of a structure, material fatigue may develop in unexpected locations and/or sooner than expected.

It is therefore an object of the invention to provide an improved way of structurally testing a component.

This object is achieved by the test rig of claim 1; by the wind turbine setup of claim 9; and by the method of claim 11 of testing a component.

According to the invention, the test rig for testing a component comprises an adjustable radial weight arrangement mounted on a rotatable shaft; a driving means for rotating the shaft at a shaft rotational velocity; and an adjusting means for adjusting the centre of mass of the adjustable radial weight arrangement relative to the shaft while the shaft is rotating. The adjustable radial weight arrangement comprises at least a first radial weight and a second radial weight mounted on the shaft such that an angular displacement between the radial weights is adjustable.

An adjustment of the centre of mass of the radial weight arrangement relative to the shaft results in an alteration of the centrifugal force generated as the radial weight arrangement rotates. An advantage of the test rig according to the invention is that the centre of mass of the adjustable radial weight arrangement can be altered without interruption, so that the test rig can continuously operate. Such a test rig can be used for stress testing and/or fatigue testing of the component under test, by transferring the forces in some suitable manner to the component under test. In the context of the invention, the "radial weight" is to be understood as a mass or weight mounted to the shaft by means of a radial "arm" such that the greater portion of the mass is offset ally outward from the shaft, or a more complex shape with the greater portion of its mass located at the outer end of the radial arm. In other words, a radial weight can be mounted on the rotatable shaft such that the centre of mass of the radial weight is located at a distance removed from the rotatable shaft.

According to the invention, the wind turbine test setup - for testing components of a wind turbine - comprises such a test rig mounted to a wind turbine component such that centrifugal forces generated by the rotating adjustable radial weight arrangement during operation of the test rig are transferred as lateral forces or loading forces to the wind turbine component under test, i.e. to forces comparable to those that would act on the wind turbine during normal operation.

An advantage of the wind turbine test setup according to the invention is that it can be used to very accurately simulate a wider range of loads that would be exerted on the nacelle during its lifetime. Because the radial weight is adjustable during the operation of the test rig, i.e. the test rig need not be halted or stopped in order to manually adjust the centre of mass of the radial weight in order to increase or decrease the centrifugal forces, the uninterrupted test can be carried out over a shorter period of time while also needing less supervision than a prior art test. The costs of performing the test may therefore be reduced, while at the same time more useful and informative test results may be obtained. The collected data can be used as a basis for correcting design flaws or improving the design of a comparable wind turbine. This can lead to significant cost savings, since a long component lifetime is of critical importance to large expensive structures such as wind turbines, which are expensive to manufacture, install and maintain.

According to the invention, the method of testing a component comprises the steps of mounting such a test rig to the component under test; actuating the driving means to rotate the shaft at a frequency of rotation; and actuating the adjusting means to adjust the centre of mass of the adjustable radial weight arrangement relative to the shaft while the shaft is rotating.

An advantage of the method according to the invention is that, with relatively little effort, realistic and informative data can be collected during a test that can be carried out essentially without interruption.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the type of component under test is intended to be mounted on top of a tower or similar supporting structure, for example the housing of a wind turbine. The component under test can be essentially fully equipped as it would be in "real life". In the following, again without restricting the invention in any way, it may be assumed that the component is a wind turbine housing which may include a nacelle, generator, bedframe, and any other elements such as a hub, a yaw interface, etc. To allow the test rig to be operated in a practical test environment, the wind turbine housing can be equipped with all the usual components or parts with the exception of the rotor blades.

The adjustable radial weight arrangement can be realised in any appropriate manner. For example, the adjustable radial weight arrangement can comprise a carrier body that is realised to collect or release additional weights while it rotates about the shaft. The additional weights could be realised to extend the length of the carrier body, thus moving the centre of mass of the radial weight arrangement further out from the shaft, and increasing the centrifugal force as the radial weight arrangement rotates. The additional weights could adhere magnetically to the carrier body. By using an electromagnet, the additional weights could be released as desired to move the centre of mass back towards the shaft. However, at relatively high rotational frequencies, it may be difficult or dangerous to attach or release such additional weights. Therefore, in a particularly preferred embodiment of the invention, the adjustable radial weight arrangement comprises at least a first radial weight and a second radial weight mounted on the shaft such that an angular displacement between the radial weights is adjustable, and the adjusting means is realised to adjust the centre of mass of the adjustable radial weight arrangement by altering the angular displacement between the radial weights. Since the adjustable radial weight arrangement comprises two or more individual radial weights, its centre of mass may be regarded as a collective or combined centre of mass of the individual radial weights. In the following therefore, the centre of mass of the adjustable radial weight arrangement may be referred to as the "collective centre of mass", "common centre of mass", or "combined centre of mass".

The individual radial weights could each be movably mounted on the shaft. However, in a preferred embodiment of the invention, only the first radial weight is rigidly mounted to the shaft, for example such that this first radial weight and the shaft share a common axis of rotation. The first radial weight can be bolted or otherwise secured to the shaft such that one complete revolution of the shaft results in one complete revolution of the first radial weight. Preferably, the second and any further radial weights are moveably mounted on the shaft, for example these can be freely rotatable about the shaft, at least within a certain angular range.

Clearly, for any combination of weights, the position of the collective centre of mass of the radial weight arrangement is determined by the angular distance(s) between the individual weights and the mass of each individual weight. In the test rig according to the invention, the position of the collective centre of mass relative to the shaft is directly related to the angular distance(s) between individual weights, for example between a first radial weight and a second radial weight. The angular distance between two weights is to be understood as the angle subtended between a longitudinal axis of a first radial weight and a longitudinal axis of a second radial weight. A longitudinal axis of an individual radial weight can pass through the centre of mass of that radial weight. For weights realised as radial arms extending outward from the shaft, the longitudinal axes of the weights coincide essentially at a point on the axis of rotation of the shaft.

In a particularly preferred embodiment of the invention, the adjusting means is realised to obtain an angular displacement between the first radial weight and the second radial weight in the range of 0° to 180°. An angular displacement of 0° can be achieved by, for example, arranging individual weights one above the other on the rotational shaft. In this position, the collective centre of mass of the radial weight arrangement is furthest out from the shaft, and this position is associated with the greatest centrifugal force that can be generated by the test rig during operation. An angular displacement of 180° can be achieved by arranging the individual weights in line, i.e. on either side of the shaft such that their longitudinal axes are in line and the centre of mass lies at some point along that line. In the case of two equal weights, the combined centre of mass of the radial weight arrangement can be regarded as a point on the axis of rotation of shaft. If the radial weight arrangement comprises two individual weights of different mass, when these are displaced by an angular distance of 180°, the combined centre of mass of the radial weight arrangement will be displaced by a certain amount outward from the axis of rotation of the shaft in the direction of the heavier weight. An angular displacement of 180° allows a lowest centrifugal force to be generated by the test rig.

The adjusting means is used to adjust the collective centre of mass of the adjustable radial weight arrangement relative to the shaft while the shaft is rotating. In this way, a certain centrifugal force can be obtained for various combinations of the rotational speed of the shaft and position of the combined centre of mass of the weights. For example, the adjusting means can adjust the position of the combined centre of mass of the weights so that a constant centrifugal force is maintained while the rotational speed is being increased or decreased.

In a preferred embodiment of the test rig according to the invention, the adjusting means comprises a displacement means (pinion/chain) connected between the first radial weight and the second radial weight. As indicated above, the first radial weight of the radial weight arrangement is preferably rigidly mounted to the shaft. Therefore, the adjusting means could be mounted or secured to the first radial weight, so that the second (and any further) radial weight can be displaced relative to the first radial weight by a suitable amount. The displacement means can be any suitable device such as a piston of adjustable length mounted at a first end to the first radial weight and at a second end to the second radial weight, so that an alteration in length of the piston results in a corresponding adjustment in the angular displacement of the second radial weight relative to the first radial weight. In a further preferred embodiment of the invention, the displacement means comprises a chain wheel and chain. The displacement means can be realised to allow an essentially infinite adjustment of the angular distance between radial weights, or can be realised to allow a step-wise adjustment, as appropriate.

The centrifugal forces generated by the rotating radial weights during operation of the test rig will depend on the weights and the dimensions of the test rig components, and the distance of the combined centre of mass from the shaft. For example, a radial weight arrangement with a small mass of only a few kg can result in a centrifugal force of only a few tens of Newtons, even at high rotational frequencies. Such a "small" test rig might be used to test components or parts such as a mounting of a generator; a rotor blade; etc. A large combined mass of about 1000 kg can result in a centrifugal force of several hundreds of kN, even at rotational frequencies of only a few Hz. Therefore, safety precautions are preferably taken, particularly for a "large" test rig, to ensure that damage is limited in the event of a failure, for example a failure of the displacement means. Depending on the realisation, a piston or chain might break, so that the second radial weight is no longer fixed relative to the first radial weight. A "safe" position for the now freely moving second radial weight would be a position that brings the collective centre of mass of the radial weight arrangement back inwards, so that the centrifugal force is reduced. Therefore, in a preferred embodiment of the invention, the second radial weight, and any other additional radial weight, is eccentrically mounted on the rotatable shaft. This can be achieved by mounting an eccentric between the second radial weight and the shaft. The centre of the eccentric is offset from the axis of rotation of the shaft, and this offset can encourage the second radial weight to assume a "safe" position relative to the first, fixed, radial weight if it should ever be released from the first radial weight owing to failure of the displacement means.

Preferably, the displacement means is controlled or adjusted in dependence of the angular velocity or rotational frequency of the shaft. In a preferred embodiment of the invention, therefore, the test rig comprises a controller for controlling the angular displacement adjusting means according to the shaft rotational frequency. A single controller such as a programmable logic controller (PLC) could be used to control displacement means as well as the driving means that drives the shaft. For example, the PLC can determine a displacement amount required to obtain a specific centrifugal force at a specific rotational frequency; equally, it can determine the rotational frequency required to obtain a specific centrifugal force for a specific displacement amount. Preferably, the controller is connected in some suitable manner to the angular displacement adjusting means, for example by means of a wireless connection or a wired connection between the controller and the displacement means. Such a wired connection can be made, for example, through a hollow rotatable shaft. Preferably, the method according to the invention comprises a step of consulting a database such as a look-up-table (LUT) to determine an angular displacement and/or a shaft rotational frequency associated with a specific force to be transferred to the component under test. A PLC, programmed to carry out a test for a certain length of time and under a constraint to not exceed a certain maximum centrifugal force, can consult such a table to determine suitable frequency and angular displacement value pairs, and can control the frequency and/or angular displacement accordingly.

A radial weight can comprise a single block of a suitable material such as structural steel, with a through-hole or sleeve so that it may be mounted onto the test rig shaft. In the case of the second radial weight, the sleeve can accommodate a bushing or other suitable type of bearing, and may also accommodate an eccentric, as indicated above. In the case of the first radial weight, this may comprise one or more flanges for connecting or securing the first radial weight to the shaft. To increase or decrease the centrifugal forces that can be generated by the test rig, for example when the test rig is to be used in different setups for testing different components, one or more of the radial weights may be dismounted and replaced by similar weights having different masses. However, in a preferred embodiment of the invention, a radial weight comprises a radial weight body realised to accommodate a number of individual weight elements connectable to the radial weight body. For example, one or more additional weight elements may be attached to a radial weight body to increase its mass, or detached from it to decrease its mass. Such an additional weight element can have a mass of 5% - 10% of the mass of the radial weight body. The radial weight can be designed so that several individual weight elements can be connected onto one or both flat sides of an essentially flat radial weight body, for example in a stacked arrangement.

Preferably, a radial weight is mounted on the shaft such that a main plane of the radial weight is essentially perpendicular to the axis of rotation of the shaft. Such a radial weight is essentially "flat" in shape. A realisation with two or more such individual radial weights, mounted one above the other on the shaft, allows them to be easily brought into a "stacked" arrangement whose common centre of mass is at a position furthest from the shaft. When the individual radial weights are spread in a fan-like arrangement, the centre of mass of the radial weight combination is brought closer to the shaft. Alternatively or in addition, the radial weights can be realised to give a nested arrangement, i.e. so that one radial weight can essentially fit around or otherwise accommodate one or more further radial weights.

The centrifugal forces generated by the test rig are preferably converted essentially directly into forces or loads acting on the component under test. Therefore, in a preferred embodiment of the invention, the test rig comprises a connecting means or load transfer means for connecting the test rig to the component under test. The connecting means is preferably realised to convert the centrifugal forces generated during operation of the test rig to lateral forces acting on the component under test. For example, the connecting means or load transfer means can comprise a rigid cage or framework. The shaft is preferably mounted at both ends to this cage or framework, for example by suitable bearings that allow it to freely rotate. The cage or framework is preferably realised to be securely mounted to the component under test, i.e. with little or no degree of freedom between the cage and the component under test. In this way, the centrifugal forces generated by the rotating weights are transferred via the shaft to the cage, and via the cage to the component under test. Preferably, the shaft axis is mounted in the cage at a suitable orientation, since the plane of the centrifugal forces will be perpendicular to the axis of rotation of the shaft. For example, centrifugal forces generated by weights rotating about a vertical shaft can be translated - by a suitably rigid cage or framework - into horizontal lateral forces acting on the component under test.

As the radial weights rotate about the shaft, the direction and magnitude of the lateral force will also change. For a test rig mounted to the nose or hub of a test nacelle, the centrifugal forces can be translated into realistic lateral loading forces that occur in a wind turbine as the blades rotate, or simply as a result of the wind forces on the nacelle and tower.

The test rig according to the invention allows a constant load to be applied to the component under test. Here, "constant load" should be understood as a constant maximum load or a constant load magnitude, since the direction of the lateral force, i.e. the force vector, applied to the component under test will change as the radial weight rotates about the shaft. Using the test rig according to the invention, such a "constant load" can be applied to the component under test even at increasing rotational frequency of the shaft, since the centre of mass of the radial weight can easily be adjusted as the rotational frequency is adjusted. The centrifugal force is given by the equation:

$$F = m \cdot r \cdot \omega^2$$

where m is the mass of the radial weight arrangement; $\omega$ is the angular velocity of the shaft, i.e. the rotational frequency in radians per second; and the radius r is the distance between the axis of rotation and the combined centre of mass of the radial weight arrangement.

Bearing in mind that the centre of mass can be brought easily to essentially any point between its minimum and maximum, as described above, it is clear that the centrifugal force can be increased or decreased simply by adjusting the radius; equally the centrifugal force can be kept constant even when the angular velocity changes, by a corresponding adjustment to the radius. This allows the test rig to operate even over a resonant frequency of the test setup. For example, as the test rig frequency approaches such a resonant frequency, the centre of mass of the radial weight arrangement can be reduced to decrease the centrifugal force while the frequency is maintained. The reduction in centrifugal force results in a reduction in the lateral force applied to the component under test, so that resonant frequency oscillations of the test setup will not develop. The approach to a resonant frequency could be detected by sensors such as strain gauges or accelerometers attached to suitable regions of the component under test and/or to the test rig. In this way, the test rig according to the invention can be used over a wider range of test conditions. As indicated above, the magnitude of the lateral forces actually applied to the component under test is much greater than the magnitude of the centrifugal forces, i.e. the centrifugal forces are effectively multiplied or magnified by the oscillating behaviour of the test setup near a resonant frequency.

The test rig could be constructed to imitate the real-life forces as closely as possible, even in magnitude and frequency. However, since the effects of the loads applied to a real-life component may develop relatively slowly, a test using such a test rig would have to run for a correspondingly long time, for example for several years. For example, wind gusts that act on a wind turbine or similar structure can have a very low "frequency", for example only about 0.1 Hz, 0.01 Hz, or even less. Strong, regular wind gusts can result in loading of various structural components, and can result in an oscillation of a wind turbine tower at these frequencies. A real-time test of the fatigue resulting from such loading would take a prohibitively long time. Therefore, in a preferred embodiment of the invention, the test rig is realised such that a force transferred from the test rig to the component under test is scaled by a factor of at least 10, more preferably at least 20, most preferably at least 30, to a real-life force applied to such a component. With a scale factor of 10, the effects of such regular wind gusts with an average frequency of only 0.1 Hz can be imitated using the test rig according to the invention at a frequency of about 1 Hz. Similarly, a scaling up by a factor of 30 allows the test rig to run at about 3 Hz. At these more practicable rotational speeds, realistic fatigue effects as a result of such oscillations can be observed over a much shorter time frame. Clearly, the long-term effects of "normal" loads such as those exerted on the nacelle and other elements as a result of the rotor blades' rotation during operation of the wind turbine, or by wind gusts or constant high wind, can easily be imitated in a scaled-up and speeded-up manner using the test rig according to the invention. For a test rig to be used in a wind turbine test setup, the adjustable radial weight arrangement of the test rig preferably has a suitably large total mass; and the driving means of the test rig is realised to rotate the shaft at a suitable shaft rotational frequency. Such a test rig is then capable of exerting "realistic" lateral forces to the hub and nacelle of the wind turbine test setup during a test run of the test rig, i.e. lateral forces that are equivalent to the forces experienced by comparable components in a real-life time span.

A test sequence could comprise operating the test rig at a fixed rotational frequency and a fixed centrifugal force for a specific length of time, for example several minutes or hours, followed by an adjustment of the rotational frequency and centrifugal force and applying these for another specific length of time. Preferably, however, to imitate "real-life" loading effects more realistically, the rotational frequency of the shaft is preferably cyclically adjusted between a lower frequency and an upper frequency in a frequency cycle, and such a frequency cycle is preferably repeated for a predefined duration, which predefined duration corresponds to or is derived from an estimated lifespan of the component under test.

As indicated above, the loads transferred to the component under test will cause the effects of strain and fatigue to develop. Therefore, the wind turbine test setup preferably comprises a suitable arrangement of sensors such as strain gauges, accelerometers, etc. mounted or otherwise connected to any relevant parts or elements that are susceptible to material fatigue. Each sensor can transmit data to a data recorder unit, such as a suitable computer, for storage and analysis. An arrangement of cameras or other optical sensors could also be used to observe behaviour such as vibrations or the development of cracks.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Fig. 1 shows an embodiment of a wind turbine test setup according to an embodiment of the invention;
Fig. 2 shows an embodiment of a test rig according to an embodiment of the invention;
Fig. 3 shows a radial weight arrangement and a rotatable shaft in an embodiment of a test rig according to an embodiment of the invention;
Fig. 4 is a schematic representation of various positions for a radial weight arrangement on a shaft and corresponding centrifugal forces;
Fig. 5 is a schematic representation of part of a radial weight arrangement on a shaft and corresponding centrifugal forces;
Fig. 6 shows a graph of lateral forces obtainable using a prior art test setup;

Fig. 7 shows a graph of lateral forces obtainable using a wind turbine test setup according to an embodiment of the invention;
Fig. 8 shows a displacement means in a further embodiment of the test rig according to the invention.

In the diagrams, like numbers refer to like objects throughout. Objects in the diagrams are not necessarily drawn to scale.

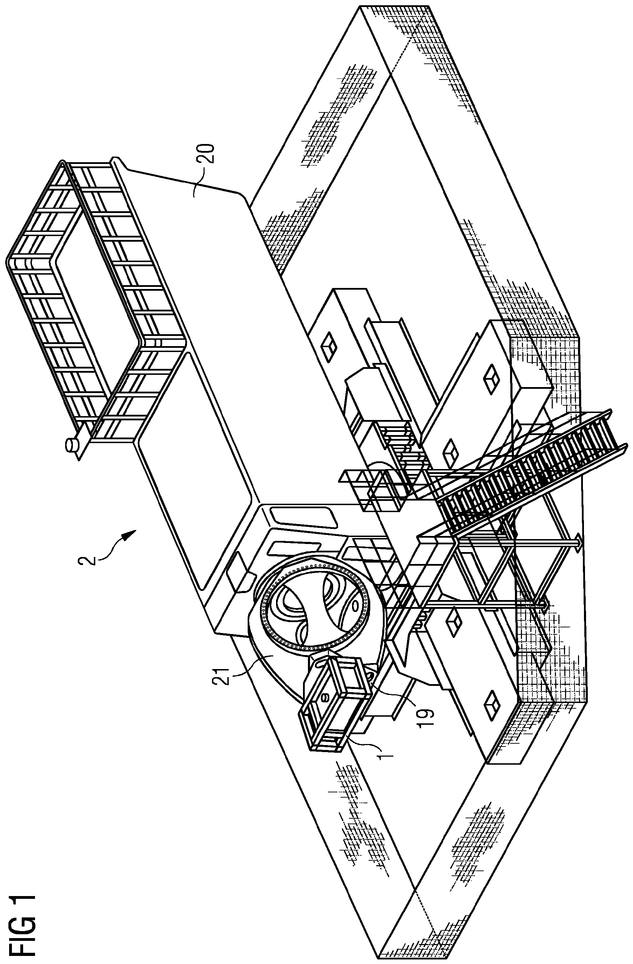

Fig. 1 shows an embodiment of a wind turbine test setup 2 according to the invention. The component under test comprises a nacelle 20 and hub 21 of a wind turbine. The same type of model can be used as would be used in real-life, and the nacelle 20 can be mounted on a tower model (for example a short-spring arrangement) that imitates the behaviour of an appropriate tower construction. To imitate the effects of the rotor blade rotation and wind loading, a test rig 1 according to the invention is mounted securely to the hub 21 by means of an adapter 19 or connecting means 19 so that centrifugal forces generated in the test rig are transferred essentially undiminished as lateral forces F to the hub 21 and nacelle 20.

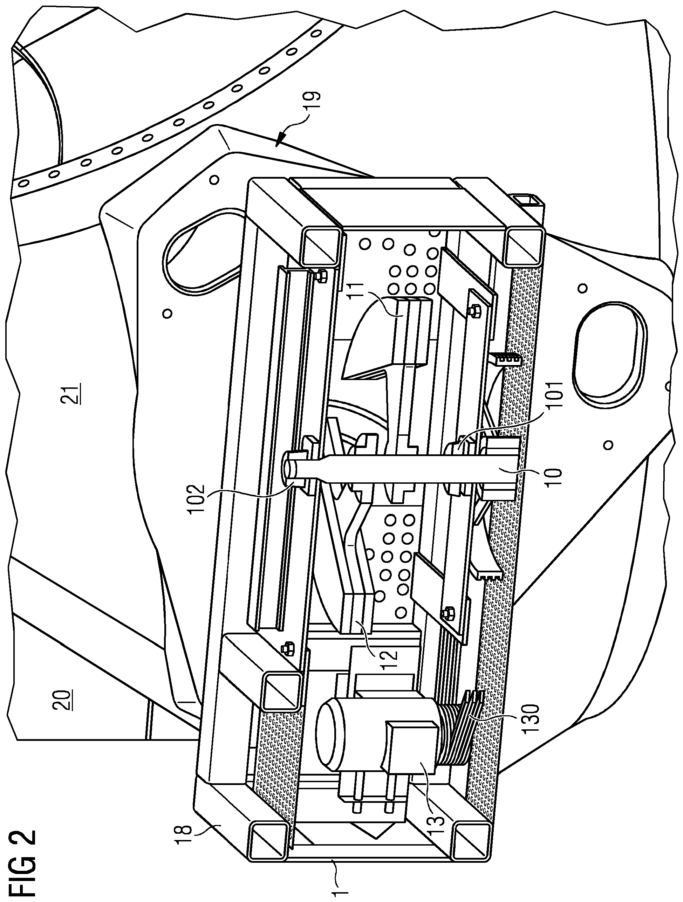

Fig. 2 shows a partial cut-away of an embodiment of a test rig 1 according to the invention. The test rig 1 comprises a cage 18 or framework 18 in which a rotatable shaft 10 is rotatably mounted by means of a bearing arrangement 101, 102. A driving means 13 such as a motor 13 is realised to drive the shaft 10, in this example by means of a drive belt 130. A radial weight arrangement 11, 12 is mounted on the shaft 10. One radial weight 11 is fixed on the shaft 10, while the other radial weight 12, also mounted on the shaft 10, can be displaced relative to the first radial weight 11. An angular displacement adjusting means is not shown in the diagram for the sake of clarity, but may be understood to alter and maintain the angular displacement between the radial weights 11, 12. As the shaft 10 and the radial weights 11, 12 rotate, a centrifugal force is generated. A force vector of the centrifugal force may be visualized as a vector pointing outward from the shaft, passing through the common centre of mass of the radial weight arrangement 11, 12, and rotating with the angular velocity of the shaft 10. This centrifugal force is transferred by means of the rigid cage 18 through the connecting means 19 and into the hub 21 and nacelle of the wind turbine test setup.

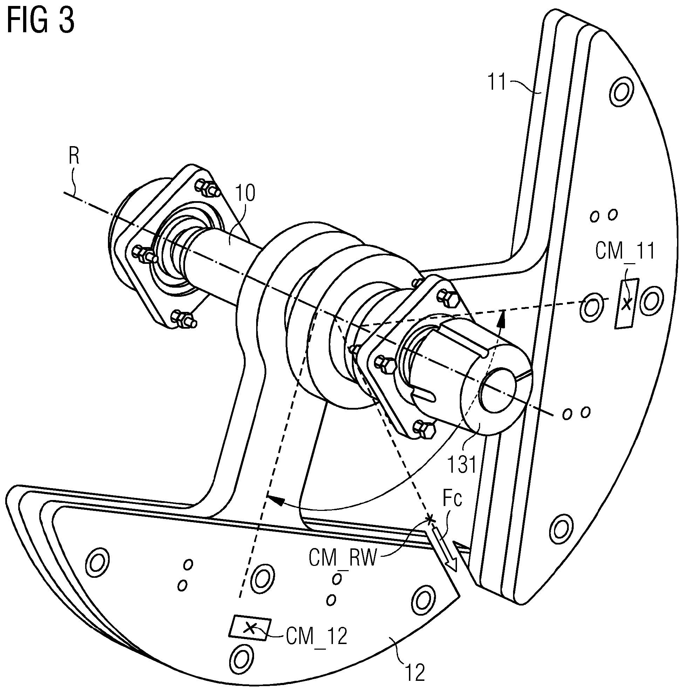

Fig. 3 shows a radial weight arrangement 11, 12 and a rotatable shaft 10 in an embodiment of a test rig according to the invention. The shaft 10, with an axis of rotation R, is rotated by a drive belt (not shown) which can grip and rotate the shaft 10 by means of a mounting 131. The diagram also shows mounting flanges for mounting the shaft 10 to the cage. The diagram shows two radial weights 11, 12 at an angular displacement, indicated by the double-ended arrow. The centre of mass CM_11, CM_12 of each radial weight 11, 12 is located at some point inside the outer portion of each radial weight 11, 12. Since the radial weights 11, 12 are arranged in a staggered fashion on the shaft 10, the common centre of mass CM_RW of the radial weight arrangement 11, 12 is therefore in a point in space between the radial weights 11, 12. The force vector Fc of the centrifugal force generated when this radial weight arrangement 11, 12 rotates with the shaft 10 will therefore pass through the centre of mass CM_RW of the radial weight arrangement 11, 12, as indicated by the force vector arrow Fc in the diagram.

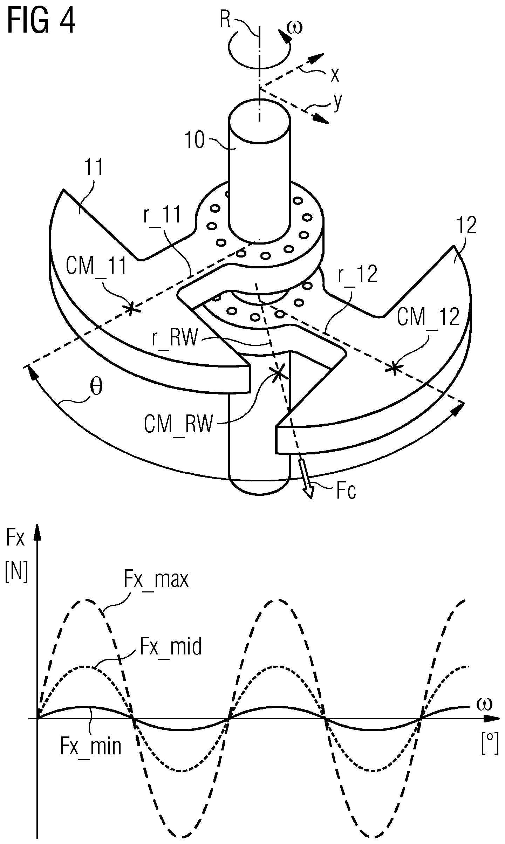

Fig. 4 shows, in an upper part of the diagram, a schematic representation of various positions for a radial weight arrangement 11, 12 on a shaft 10 and corresponding centrifugal force components. The diagram indicates the axis of rotation R, the angular velocity $\omega$ of the shaft 10, and the directions of the x-axis and y-axis of a Cartesian plane. The centre of mass CM_11, CM_12 of each radial weight 11, 12 is indicated, their angular displacement $\theta$, and each corresponding radius r_11, r_12. The collective centre of mass CM_RW of the combined weight arrangement 11, 12 is indicated, together with the corresponding radius r_RW. The centrifugal force vector Fc comprises x and y components. The curves Fx_min, Fx_max, Fx_mid shown in the plot in the lower part of the diagram indicate the x component of the centrifugal force vector Fc. As the radial weight arrangement 11, 12 rotates through a full revolution of 360°, the x component of the centrifugal force vector Fc oscillates between zero and a maximum (the y component may be understood to exhibit the same oscillation, phase-shifted by 180°). For an angular displacement $\theta$ of 180°, i.e. with the radial weights pointing outward in opposite directions, the centrifugal force cannot exceed a certain minimum, as indicated by the graph Fx_min. For an angular displacement $\theta$ of 0°, i.e. with the radial weights arranged one above the other and pointing outward in the same direction, the centrifugal force can reach a maximum value, as indicated by the graph Fx_max. For any other position, for example for an angular displacement $\theta$ of 90°, i.e. with the radial weights at right angles, the centrifugal force can reach an intermediate magnitude, as indicated by the graph Fx_mid. Clearly, any intermediate value of angular displacement $\theta$ will be associated with a corresponding x component, so that the force vector essentially rotates in a plane that is orthogonal to the axis of rotation R of the shaft 10.

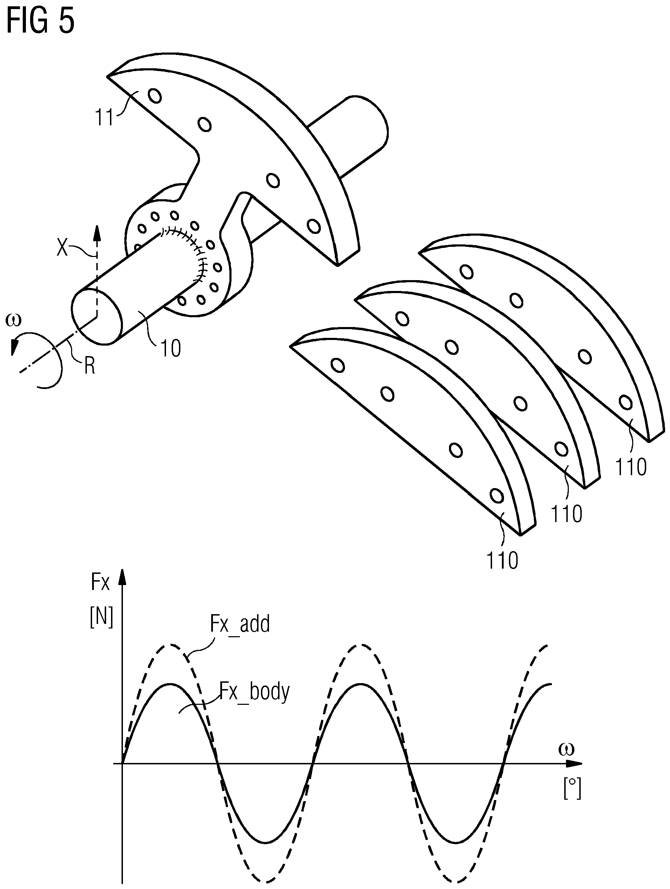

Fig. 5 is a schematic representation of part of a radial weight arrangement on a shaft 10 and corresponding x-components of the centrifugal force. Here, a radial weight 11 comprises a radial weight body to which additional weight elements 110 can be secured. The plot in this diagram shows the x-component Fx_body of the centrifugal force obtainable by the radial weight body alone and the x-component Fx_add of the centrifugal force obtainable by the radial weight body with a number of additional weight elements 110 attached. Such additional weight elements 110 can be secured to a radial weight body before commencing a test procedure to configure the test rig to the requirements or characteristics of a specific component under test.

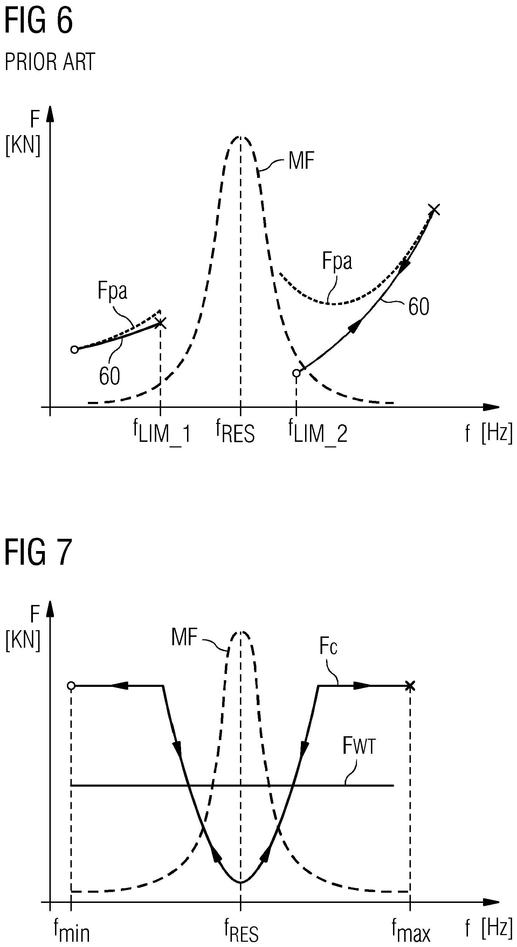

Fig. 6 shows a graph of forces F [kN] obtainable using a prior art test setup. A prior art test rig does not permit the radial weight arrangement to be adjusted during operation, and cannot therefore be operated about a resonant frequency $f_{RES}$ of the test setup. The diagram also indicates a dimensionless magnification factor MF for the test rig, indicated by the dotted line. This is a measure of by how much the centrifugal force is multiplied or magnified as it is translated into a force $F_{pa}$ transferred to the component under test, (which has been brought into an oscillatory motion by the test rig). As the diagram shows, a critical region is located about the resonant frequency $f_{RES}$ of the test setup. Here, the forces generated by the test rig would be magnified to a dangerous level by the resonant oscillations, so that a test run using the prior art test rig must be interrupted about the resonant frequency. Therefore, the prior art test procedure is carried out in two stages. The test rig requires an initial weight setup, and centrifugal forces 60 are generated using that weight. The test rig is allowed to operate for a suitable length of time, cycling the rotational velocity within a frequency range bounded by an upper frequency limit $f_{LIM\_1}$. The test rig is then halted, and the weight is adjusted. Using the new combination of weights, centrifugal forces 60 are generated by cycling the rotational velocity within a frequency range bounded by a lower frequency limit $f_{LIM\_2}$. The frequency limits $f_{LIM\_1}$, $f_{LIM\_2}$ are chosen at a "safe distance" from the resonant frequency $f_{RES}$, so that the resulting force $F_{pa}$ is kept does not exceed a reasonable maximum value. As a result, any measurements collected by sensors on the component under test will be incomplete owing to the discontinuity about the resonant frequency. Furthermore, since the weights cannot be adjusted during operation, the resonant behaviour of the test setup can result in an unwanted magnification of the actual forces applied to the component under test, and these forces cannot be regarded as "realistic", so that results measured by strain gauges, stress sensors etc. may not deliver reliable or realistic results for the test run. The lateral forces $F_{pa}$ applied to the component under test may be considerably greater in magnitude than the centrifugal forces 60 over much of the test frequency range, as indicated by the discrepancies between these graphs 60, $F_{pa}$.

Fig. 7 shows a graph of forces obtainable using a wind turbine test setup according to the invention. Here, the adjustable radial weight arrangement allows the centrifugal force Fc to be reduced as required about the resonant frequency $f_{RES}$ of the test setup. For example, two or more radial weights can be moved to opposite sides of the rotating shaft so that their angular displacement is maximised. In this way, the centrifugal force Fc can be minimised for a rotational frequency about the resonant frequency $f_{RES}$. This diagram also indicates a dimensionless magnification factor MF for the test rig, indicated by the dotted line. The resulting force $F_{WT}$ transferred to the wind turbine will therefore never exceed a dangerous level, and the test can be carried out without interruption between a lower frequency $f_{min}$ and an upper frequency $f_{max}$, for example between 1.0 Hz and 6.0 Hz. The test run can be cycled through these frequencies, i.e. by increasing the rotational frequency of the shaft from 1.0 Hz to 6.0 Hz, then decreasing the rotational frequency of the shaft from 6.0 Hz to 1.0 Hz, as indicated by the arrows on the graph of centrifugal force Fc, and repeating this cycle indefinitely.

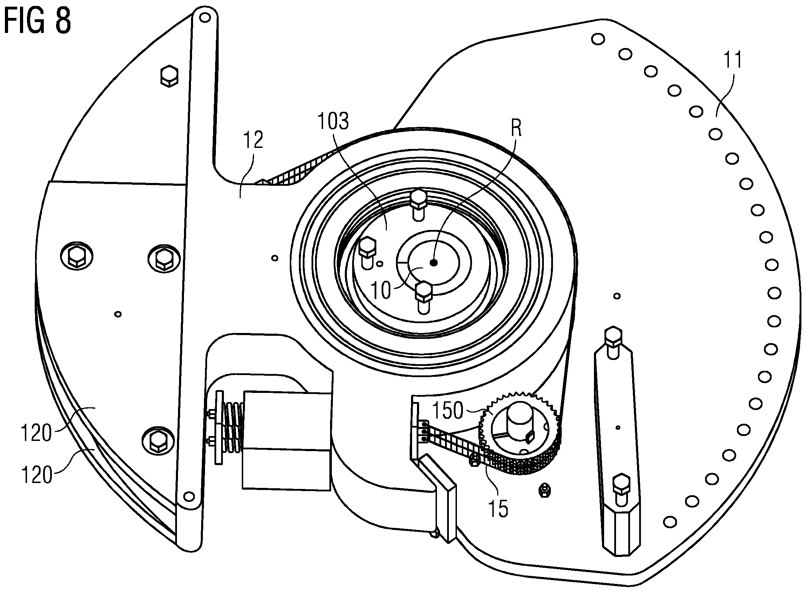

Fig. 8 shows a realisation of a radial weight arrangement 11, 12 in a further embodiment of the test rig according to the invention. Here, a chain 15 is used to alter the angular displacement between the first radial weight 11 and the second radial weight 12. The chain 15 is driven by a toothed wheel 150, which in turn is actuated by a controller (not shown), in dependence of the rotational velocity of the shaft 10. The second radial weight 12 is mounted on the shaft 10 by means of an eccentric 103. The eccentric 103 displaces the second radial weight 12 from the axis of rotation R of the shaft 10. In the event of a failure of the displacement means, i.e. the chain 15 or toothed wheel 150, the eccentric 103 encourages the second radial weight 12 to move to a "safe" position on the opposite side of the shaft 10, thus avoiding damage to the test rig or to the component under test. Although the present invention has been disclosed in the form of preferred embodiments and variations thereon, it will be understood that numerous additional modifications and variations could be made thereto without departing from the scope of the invention as defined by the appended claims. For the sake of clarity, it is to be understood that the use of "a" or "an" throughout this application does not exclude a plurality, and "comprising" does not exclude other steps or elements.

**Claims**

1. A test rig (1) for testing a component (20, 21), which test rig (1) comprises

    - an adjustable radial weight arrangement (11, 12) mounted on a rotatable shaft (10);
    - a driving means (13) for rotating the shaft (10) at a shaft rotational velocity ($\omega$);
    - an adjusting means (15, 150) for adjusting the centre of mass (CM_RW) of the adjustable radial weight arrangement (11, 12) relative to the shaft (10) while the shaft (10) is rotating;

    **characterised in that**
    the adjustable radial weight arrangement (11, 12) comprises at least a first radial weight (11) and a second radial weight (12) mounted on the shaft (10) such that an angular displacement ($\theta$) between the radial weights (11, 12) is adjustable.

**2.** A test rig according to claim 1, wherein the first radial weight (11) is rigidly mounted to the shaft (10), and wherein the second (12) and any further radial weights are moveably mounted on the shaft(10).

**3.** A test rig according to claim 2, wherein the adjusting means (15, 150) is realised to adjust the centre of mass (CM_RW) of the adjustable radial weight arrangement (11, 12) by altering the angular displacement ($\theta$) between the radial weights (11, 12).

**4.** A test rig according to claim 3, wherein the adjusting means (15, 150) is realised to obtain an angular displacement ($\theta$) between the first radial weight (11) and the second radial weight (12) in the range of 0° to 180°.

**5.** A test rig according to any of claims 2 to 4, wherein the adjusting means (15, 150) comprises a displacement means (15, 150) connected between the first radial weight (11) and the second radial weight (12).

**6.** A test rig according to any of claims 2 to 5, wherein the second radial weight (11) is eccentrically mounted on the rotatable shaft (10).

**7.** A test rig according to any of the preceding claims, comprising a programmable controller for controlling the adjusting means (15, 150) according to the shaft rotational velocity ($\omega$).

**8.** A test rig according to any of the preceding claims, comprising a connecting means (19) for connecting the test rig (1) to a component (20, 21) to be tested, which connecting means (19) is realised to transfer forces (Fc) generated during operation of the test rig (1) to the component under test (20, 21).

**9.** A wind turbine test setup (2) for testing a number of components (20, 21) of a wind turbine, which wind turbine test setup (2) comprises a test rig (1) according to any of claims 1 to 8 mounted to a wind turbine component (20,21) such that centrifugal forces (Fc) generated by the rotating radial weights (11, 12) during operation of the test rig (1) are transferred as lateral forces ($F_{WT}$) to the wind turbine component (20,21) under test.

**10.** A wind turbine test setup according to claim 9, wherein a total weight of the adjustable radial weight arrangement (11, 12) of the test rig (1) and a shaft rotational frequency of the test rig (1) are chosen to generate centrifugal forces (Fc) corresponding to wind turbine forces ($F_{WT}$).

**11.** A method of testing a component (20, 21), which method comprises

- mounting a test rig (1) according to any of claims 1 to 8 to the component under test (20, 21);
- actuating the driving means (13) to rotate the shaft (10) at a rotational velocity ($\omega$); and
- actuating the adjusting means (15, 150) to adjust the centre of mass (CM_RW) of the adjustable radial weight arrangement (11, 12) relative to the shaft (10) while the shaft (10) is rotating.

**12.** A method according to claim 11, wherein the step of adjusting the centre of mass (CM_RW) of the adjustable radial weight arrangement (11, 12) relative to the shaft (10) is performed in dependence of the shaft rotational velocity ($\omega$).

**13.** A method according to claim 11 or claim 12, wherein the centre of mass (CM_RW) of the adjustable radial weight arrangement (11, 12) is adjusted towards the shaft (10) for a shaft rotational frequency corresponding to a resonant frequency ($f_{RES}$) of the test setup (2).

**14.** A method according to any of claims 11 to 13, comprising the step of cyclically adjusting the shaft rotation frequency between a lower frequency ($f_{min}$) and an upper frequency ($f_{max}$) in an uninterrupted frequency cycle.

**15.** A method according to claim 14, wherein a frequency cycle is repeated for a predefined duration, which predefined duration relates to an estimated lifespan of the component under test (20, 21).

**Patentansprüche**

**1.** Testanlage (1) zum Testen einer Komponente (20, 21), wobei die Testanlage (1)

- eine einstellbare Radialgewichtsanordnung (11, 12), die auf einer drehbaren Welle (10) montiert ist;
- ein Antriebsmittel (13) zum Drehen der Welle (10) mit einer Wellenumdrehungsgeschwindigkeit ($\omega$);
- ein Einstellmittel (15, 150) zum Einstellen des Schwerpunkts (CM_RW) der einstellbaren Radialgewichtsanordnung (11, 12) in Bezug auf die Welle (10), während die Welle (10) sich dreht;

umfasst, **dadurch gekennzeichnet, dass** die einstellbare Radialgewichtsanordnung (11, 12) wenigstens ein erstes Radialgewicht (11) und ein zweites Radialgewicht (12) umfasst, die so auf der Welle (10) montiert sind, dass eine Winkelverstellung ($\theta$) zwischen den Radialgewichten (11, 12) einstellbar ist.

**2.** Testanlage nach Anspruch 1, wobei das erste Radialgewicht (11) an der Welle (10) starr montiert ist und wobei das zweite (12) und etwaige weitere Radialgewichte auf der Welle (10) beweglich montiert sind.

**3.** Testanlage nach Anspruch 2, wobei das Einstellmittel (15, 150) so ausgeführt ist, dass der Schwerpunkt (CM_RW) der einstellbaren Radialgewichtsanordnung (11, 12) eingestellt wird, indem die Winkelverstellung ($\theta$) zwischen den Radialgewichten (11, 12) geändert wird.

**4.** Testanlage nach Anspruch 3, wobei das Einstellmittel (15, 150) so ausgeführt ist, dass eine Winkelverstellung ($\theta$) zwischen dem ersten Radialgewicht (11) und dem zweiten Radialgewicht (12) im Bereich von 0° bis 180° erhalten wird.

**5.** Testanlage nach einem der Ansprüche 2 bis 4, wobei das Einstellmittel (15, 150) ein Verstellmittel (15, 150) umfasst, das zwischen dem ersten Radialgewicht (11) und dem zweiten Radialgewicht (12) angeschlossen ist.

**6.** Testanlage nach einem der Ansprüche 2 bis 5, wobei das zweite Radialgewicht (11) auf der drehbaren Welle (10) exzentrisch montiert ist.

**7.** Testanlage nach einem der vorhergehenden Ansprüche, umfassend eine programmierbare Steuerung zum Steuern des Einstellmittels (15, 150) entsprechend der Wellenumdrehungsgeschwindigkeit ($\omega$).

**8.** Testanlage nach einem der vorhergehenden Ansprüche, umfassend ein Verbindungsmittel (19) zum Verbinden der Testanlage (1) mit einer zu testenden Komponente (20, 21), wobei das Verbindungsmittel (19) so ausgeführt ist, dass während des Betriebs der Testanlage (1) erzeugte Kräfte (Fc) auf die getestete Komponente (20, 21) übertragen werden.

**9.** Windturbinen-Testanordnung (2) zum Testen einer Anzahl von Komponenten (20, 21) einer Windturbine, wobei die Windturbinen-Testanordnung (2) eine Testanlage (1) nach einem der Ansprüche 1 bis 8 umfasst, die so an einer Windturbinenkomponente (20, 21) montiert ist, dass Zentrifugalkräfte (Fc), die von den rotierenden Radialgewichten (11, 12) während des Betriebs der Testanlage (1) erzeugt werden, als Seitenkräfte ($F_{WT}$) auf die getestete Windturbinenkomponente (20, 21) übertragen werden.

**10.** Windturbinen-Testanordnung nach Anspruch 9, wobei das Gesamtgewicht der einstellbaren Radialgewichtsanordnung (11, 12) der Testanlage (1) und die Wellenumdrehungsfrequenz der Testanlage (1) so gewählt sind, dass Zentrifugalkräfte (Fc) erzeugt werden, die Windturbinenkräften ($F_{WT}$) entsprechen.

**11.** Verfahren zum Testen einer Komponente (20, 21), wobei das Verfahren

    - das Montieren einer Testanlage (1) nach einem der Ansprüche 1 bis 8 an der getesteten Komponente (20, 21);
    - das Betätigen des Antriebsmittels (13) so, dass die Welle (10) mit einer Umdrehungsgeschwindigkeit ($\omega$) gedreht wird; und
    - das Betätigen des Einstellmittels (15, 150)so, dass der Schwerpunkt (CM_RW) der einstellbaren Radialgewichtsanordnung (11, 12) in Bezug auf die Welle (10) eingestellt wird, während die Welle (10) sich dreht,

umfasst.

**12.** Verfahren nach Anspruch 11, wobei der Schritt des Einstellens des Schwerpunkts (CM_RW) der einstellbaren Radialgewichtsanordnung (11, 12) in Bezug auf die Welle (10) in Abhängigkeit von der Wellenumdrehungsgeschwindigkeit ($\omega$) erfolgt.

**13.** Verfahren nach Anspruch 11 oder Anspruch 12, wobei der Schwerpunkt (CM_RW) der einstellbaren Radialgewichtsanordnung (11, 12) zur Welle (10) hin eingestellt wird, damit eine Wellenumdrehungsfrequenz einer Resonanzfrequenz ($f_{RES}$) der Testanordnung (2) entspricht.

**14.** Verfahren nach einem der Ansprüche 11 bis 13, umfassend den Schritt des zyklischen Einstellens der Wellenumdrehungsfrequenz zwischen einer unteren Frequenz ($f_{min}$) und einer oberen Frequenz ($f_{max}$) in einem ununterbrochenen Frequenzzyklus.

**15.** Verfahren nach Anspruch 14, wobei ein Frequenzzyklus für eine vordefinierte Dauer wiederholt wird, wobei die vordefinierte Dauer mit einer geschätzten Lebensdauer der getesteten Komponente (20, 21) im Zusammenhang steht.

**Revendications**

**1.** Banc d'essai (1) pour tester un élément constitutif (20, 21), lequel banc d'essai (1) comprend

    - un agencement à poids radiaux ajustable (11, 12) monté sur un arbre rotatif (10) ;
    - un moyen d'entraînement (13) pour faire tourner l'arbre (10) à une vitesse de rotation de l'arbre ($\omega$) ;
    - un moyen d'ajustement (15, 150) pour ajuster le centre de masse (CM_RW) de l'agencement à poids radiaux ajustable (11, 12) par rapport à l'arbre (10) tandis que l'arbre (10) tourne ;

**caractérisé en ce que**
l'agencement à poids radiaux ajustable (11, 12) comprend au moins un premier poids radial (11) et un deuxième poids radial (12) montés sur l'arbre (10) de telle sorte qu'un déplacement angulaire ($\theta$) entre les poids radiaux (11, 12) soit ajustable.

2. Banc d'essai selon la revendication 1, dans lequel le premier poids radial (11) est solidarisé à l'arbre (10), et dans lequel le deuxième poids radial (12) et les poids radiaux supplémentaires quelconques sont montés mobiles sur l'arbre (10).

3. Banc d'essai selon la revendication 2, dans lequel le moyen d'ajustement (15, 150) est conçu pour ajuster le centre de masse (CM_RW) de l'agencement à poids radiaux ajustable (11, 12) par modification du déplacement angulaire ($\theta$) entre les poids radiaux (11, 12).

4. Banc d'essai selon la revendication 3, dans lequel le moyen d'ajustement (15, 150) est conçu pour obtenir un déplacement angulaire ($\theta$) entre le premier poids radial (11) et le deuxième poids radial (12) compris dans la gamme de 0° à 180°.

5. Banc d'essai selon l'une quelconque des revendications 2 à 4, dans lequel le moyen d'ajustement (15, 150) comprend un moyen de déplacement (15, 150) relié entre le premier poids radial (11) et le deuxième poids radial (12).

6. Banc d'essai selon l'une quelconque des revendications 2 à 5, dans lequel le deuxième poids radial (11) est monté excentré sur l'arbre rotatif (10).

7. Banc d'essai selon l'une quelconque des revendications précédentes, comprenant un organe de commande programmable pour commander le moyen d'ajustement (15, 150) selon la vitesse de rotation de l'arbre ($\omega$).

8. Banc d'essai selon l'une quelconque des revendications précédentes, comprenant un moyen de liaison (19) pour relier le banc d'essai (1) à un élément constitutif (20, 21) destiné à être testé, lequel moyen de liaison (19) est conçu pour transférer des forces (Fc) engendrées durant le fonctionnement du banc d'essai (1) à l'élément constitutif en train de subir l'essai (20, 21).

9. Installation d'essai d'éolienne (2) pour tester un certain nombre d'éléments constitutifs (20, 21) d'une éolienne, laquelle installation d'essai d'éolienne (2) comprend un banc d'essai (1) selon l'une quelconque des revendications 1 à 8 monté sur un élément constitutif d'éolienne (20, 21) de telle sorte que des forces centrifuges (Fc) engendrées par les poids radiaux en rotation (11, 12) durant le fonctionnement du banc d'essai (1) soient transférées sous la forme de forces latérales ($F_{WT}$) à l'élément constitutif d'éolienne (20, 21) en train de subir l'essai.

10. Installation d'essai d'éolienne selon la revendication 9, dans laquelle un poids total de l'agencement à poids radiaux ajustable (11, 12) du banc d'essai (1) et une fréquence de rotation de l'arbre du banc d'essai (1) sont choisis pour engendrer des forces centrifuges (Fc) correspondant à des forces d'éolienne ($F_{WT}$).

11. Méthode d'essai d'un élément constitutif (20, 21), laquelle méthode comprend

    - le montage d'un banc d'essai (1) selon l'une quelconque des revendications 1 à 8 sur l'élément constitutif en train de subir l'essai (20, 21) ;
    - l'actionnement du moyen d'entraînement (13) afin de faire tourner l'arbre (10) à une vitesse de rotation ($\omega$) ; et
    - l'actionnement du moyen d'ajustement (15, 150) afin d'ajuster le centre de masse (CM_RW) de l'agencement à poids radiaux ajustable (11, 12) par rapport à l'arbre (10) tandis que l'arbre (10) tourne.

12. Méthode selon la revendication 11, dans laquelle l'étape d'ajustement du centre de masse (CM_RW) de l'agencement à poids radiaux ajustable (11, 12) par rapport à l'arbre (10) est effectuée en fonction de la vitesse de rotation de l'arbre ($\omega$).

13. Méthode selon la revendication 11 ou la revendication 12, dans laquelle le centre de masse (CM_RW) de l'agencement à poids radiaux ajustable (11, 12) est ajusté vers l'arbre (10) pour une fréquence de rotation de l'arbre correspondant à une fréquence de résonance ($f_{RES}$) de l'installation d'essai (2).

14. Méthode selon l'une quelconque des revendications 11 à 13, comprenant l'étape d'ajustement cyclique de la fréquence de rotation de l'arbre entre une fréquence inférieure ($f_{min}$) et une fréquence supérieure ($f_{max}$) dans un cycle de fréquence ininterrompu.

15. Méthode selon la revendication 14, dans laquelle un cycle de fréquence est répété pendant une durée prédéfinie, laquelle durée prédéfinie concerne une durée de vie estimée de l'élément constitutif en train de subir l'essai (20, 21).

FIG 1

FIG 2

FIG 3

R

11

10

CM_11

131

Fc

CM_RW

CM_12

12

FIG 4

FIG 5

# FIG 6

PRIOR ART

# FIG 7

FIG 8

**EP 2 728 332 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 392602 A

- WO 2010000711 A2